# FASCICULE DE BREVET EUROPEEN

(11) **EP 2 751 322 B1**
(45) Date de publication et mention de la délivrance du brevet: **03.06.2015**
(21) Numéro de dépôt: 12762641.4
(22) Date de dépôt: 27.09.2012
(51) Int. Cl.: D03J 1/04, B29D 30/46, B29D 30/38

(54) **DISPOSITIF ET PROCEDE D'EXTRACTION DE TRAMES DANS UNE NAPPE DE RENFORT DESTINEE A LA FABRICATION D'UN PNEUMATIQUE**
VORRICHTUNG UND VERFAHREN ZUR EXTRAKTION VON SCHUSSFÄDEN IN EINER VERSTÄRKUNGSSCHICHT ZUR HERSTELLUNG EINES REIFENS
DEVICE AND METHOD FOR EXTRACTING WEFTS IN A REINFORCING PLY INTENDED FOR THE MANUFACTURE OF A TYRE

(30) Priorité: 06.10.2011 FR 1159016
(43) Date de publication de la demande: 09.07.2014
(73) Titulaire: Compagnie Générale des Etablissements Michelin, 63000 Clermont-Ferrand (FR); Michelin Recherche et Technique S.A., 1763 Granges-Paccot (CH)
(72) Inventeur: AUBAREDE, Francis, 63040 Clermont-Ferrand Cedex 9 (FR); HOMBERT, Christophe, 63040 Clermont-Ferrand Cedex 9 (FR)
(74) Mandataire: Noel, Luminita
(86) Numéro de dépôt international: PCT/EP2012/069154
(87) Numéro de publication internationale: WO 2013/050298

(56) Documents cités:
- WO-A1-2005/005718
- JP-A- 5 200 909
- JP-A- 5 200 910
- US-A- 6 014 797
- US-A1- 2003 200 635
- US-B1- 7 168 456

## Description

L'invention concerne le domaine de la fabrication des pneumatiques, et s'intéresse plus particulièrement au traitement des nappes de renfort réalisées à partir de fils textiles.

Ces nappes sont formées par des tronçons de fils enrobés dans du caoutchouc et disposés selon un angle donné par rapport à la direction circonférentielle du pneumatique.

De manière connue, la fabrication des nappes de renfort se fait à partir de nappes de fils, dites nappes droit-fil, dans lesquelles les fils continus sont disposés côte à côte, selon un pas donné, dans une direction parallèle à la direction longitudinale de la nappe. Les fils de la nappe sont enrobés dans le caoutchouc au moyen, par exemple, d'une calandre.

Les fils de la nappe droit-fil peuvent faire l'objet d'un prétraitement pour favoriser l'adhésion du caoutchouc sur le fil.

De plus, de manière courante ces nappes droit fil comportent des tronçons de fils, dénommés fils de trame, disposés dans la direction perpendiculaire à la direction longitudinale de la nappe droit-fil dont les fils peuvent être considérés comme des fils de chaine. Les fils de trame ont pour objet de maintenir les fils de la nappe droit-fil en position pendant les opérations de manutention desdites nappes.

Il s'avère toutefois que la présence de la trame peut s'avérer gênante lors des opérations ultérieures de fabrication du pneumatique. En effet, lorsque ces fils sont présents dans une nappe destinée à former la nappe de renfort carcasse, ils peuvent provoquer des irrégularités dans l'écartement des fils de renfort au niveau de la partie sommet. Ceci s'explique par le fait que les fils de trame contrarient l'augmentation du pas d'écartement des fils de renfort dans cette zone au cours de l'opération de conformation qui a pour objet de transformer l'ébauche du pneumatique depuis une forme généralement cylindrique vers une forme toroïdale.

Aussi, les manufacturiers s'attachent à réduire cet inconvénient en fragmentant et/ou en retirant les fils de trame au cours d'une étape précédant l'enrobage des fils de renfort dans leur matrice de caoutchouc.

A cet effet, des dispositifs ont été développés par l'industrie. Ainsi, la publication JP7-34379 décrit un système de couteaux rotatifs aptes à découper les trames en tronçons de taille donnée, coopérant avec des griffes montées sur un disque rotatif et destinées à crocheter et à extraire les tronçons de trames. La publication JP5-200910 décrit un système similaire dans lequel les griffes peuvent être montées sur un axe effectuant un mouvement rectiligne.

Un ou plusieurs de ces dispositifs sont alors disposés à espace régulier dans la direction transversale à la direction de la nappe droit-fil en aval de moyens de coupe aptes à sectionner les fils de trame pour extraire les rames avant l'opération de calandrage au cours de laquelle les fils de renfort sont enrobés dans du caoutchouc.

On observe toutefois que, si ces dispositifs permettent d'enlever la plupart des tronçons de trame, quelques tronçons de trame demeurent entrelacés de manière irrégulière avec les fils de renfort. Et, à l'issue de l'opération de calandrage, ces résidus de trame constituent des surépaisseurs locales et des agrégats susceptibles de fragiliser les ponts de gomme formés entre les fils de renfort.
Le document US2003/0200635 divulgue un dispositif conforme au préambule de la revendication 1.

L'invention a pour objet de proposer un dispositif apte à réduire les inconvénients soulignés ci-dessus.

Le dispositif d'extraction des fils de trame selon l'invention comprend un crochet apte à saisir un fil de trame en effectuant un mouvement alternatif entre une position haute et une position basse. Ce dispositif se caractérise en ce que le crochet collabore avec une enclume débrayable apte à se mouvoir le long du trajet du crochet de sorte que lorsque le dispositif est en fonctionnement,
- l'enclume est engagée au contact du crochet pendant tout ou partie du mouvement de descente dudit crochet, formant une pince apte à maintenir un tronçon de trame entre le crochet et l'enclume,
- l'enclume est dégagée du contact avec ledit crochet pendant le reste du parcours du crochet, de manière à permettre au crochet d'engager un fil de trame et de libérer un tronçon de trame.

Il résulte de cette disposition particulière que le tronçon de fil de trame est saisi dans un premier temps par le crochet. Puis dans le mouvement de descente du crochet, le tronçon de trame extrait de la nappe est pris en tenaille entre le crochet et l'enclume. Il en résulte que le déséquilibre des tensions se manifestant sur les deux extrémités libres dudit tronçon, et résultant des frottements de la trame sur les fils de chaine, ne font plus échapper ledit tronçon du crochet. Maintenu fermement entre le crochet et l'enclume, le tronçon de trame peut alors être extrait complètement des fils de trame, et être évacué du dispositif après avoir relâché le contact entre le crochet et l'enclume.

Selon une forme de réalisation préférentielle, le trajet du crochet est rectiligne. Le crochet peut être monté sur une tige supportée par un arbre coulissant dans un conduit aménagé dans un châssis fixe, et entrainé dans un mouvement alternatif de monte et baisse.

On pourra alors utilement prévoir une enclume montée à coulissement sur la tige supportant le crochet ainsi qu'un élément élastique placé entre le crochet et une butée disposée sur l'arbre, de sorte que l'enclume subit une force tendant à amener ladite enclume en direction du crochet.

On pourra également prévoir un cliquet mobile monté sur le châssis, qui soit apte à engager mécaniquement l'enclume de manière à retenir le mouvement de ladite enclume lors de la remontée de l'arbre coulissant, et monté sur le châssis par l'intermédiaire d'une articulation élastique.

Pour actionner le cliquet on pourra prévoir une came disposée sur l'arbre porteur qui collabore avec un épaulement placé sur le cliquet de sorte que :
- le cliquet est libéré de son engagement mécanique avec l'enclume lorsque la came s'éloigne du corps du châssis.
- le cliquet s'engage mécaniquement sur l'enclume sous l'action de l'articulation élastique lorsque la came se rapproche du corps du châssis.

Dans le but de régler géométriquement la position de la nappe droit fil par rapport au crochet, le châssis peut utilement comporter une table destinée à recevoir la nappe droit fil sur sa face supérieure, et comportant un orifice au travers duquel circule le crochet ; auquel cas, la course de l'enclume est limitée par la face inférieure de la table.

L'invention concerne aussi une machine destinée à l'extraction de trames, comprenant un ou plusieurs dispositifs d'extraction selon l'invention disposés transversalement le long du sens de circulation d'une nappe de fils de renfort droit-fil.

On disposera utilement des éléments tranchants, aptes à sectionner les fils de trame, en amont des dispositifs d'extraction.

Il peut aussi être avantageux de prévoir des moyens de soufflage orientés de manière à générer un courant d'air apte à évacuer les tronçons de trame une fois ceux-ci libérés de la pince formée par le crochet et l'enclume.

Pour faciliter le passage du crochet, il peut être avantageux de disposer une étrave en aval de chacun d'un dispositif d'extraction qui soit apte à écarter les fils de renfort.

L'invention concerne enfin un procédé d'extraction d'un fil de trame dans lequel on utilise un dispositif et une machine comportant les caractéristiques ci-dessus.

La description qui suit s'appuie sur les figures 1 à 3 dans lesquelles :
- la figure 1 représente une vue schématique en coupe d'un dispositif selon une forme préférentielle de réalisation de l'invention,
- la figure 2 représente une vue schématique du dispositif,
- les figures 3a à 3j représentent des vues schématiques simplifiées d'un dispositif conforme à l'invention dans les différentes étapes d'un cycle de fonctionnement.

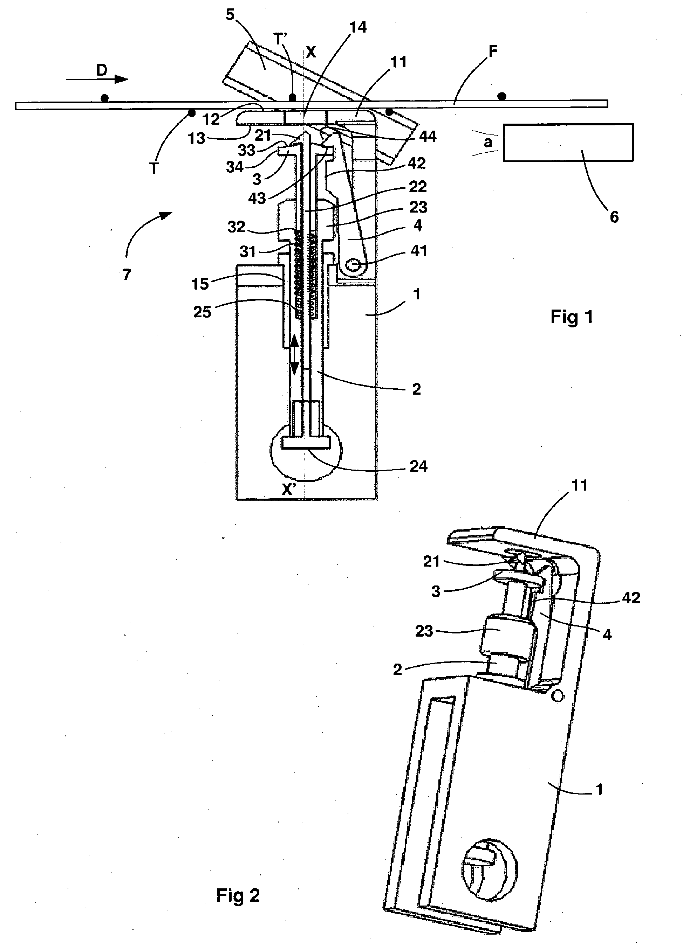

La forme de réalisation préférentielle d'un dispositif 7 conforme à l'invention est illustrée à la figure 1. La figure 2 permet de visualiser dans l'espace les différents composants.

Ce dispositif d'extraction 7, comprend un corps de châssis 1 sur lequel sont disposés les différents organes. Un arbre porteur rectiligne 2 circule le long d'un axe XX' dans un alésage pratiqué dans le châssis 1. Une chemise 15, faisant office de conduit, permet de guider l'arbre porteur 2 et de réduire les phénomènes d'usure. L'arbre porteur 2 est animé par sa partie inférieure 24 selon un mouvement alternatif de monte et baisse à l'aide d'une transmission reliée à un moteur (non représenté).

Une tige 22, coaxiale à l'arbre porteur est fixée à l'arbre moteur par une de ses extrémités et comporte un crochet 21 à son autre extrémité. Le crochet 21 subit donc les mouvements alternatifs de monte et baisse imposés par l'arbre porteur 2.

Une enclume 3, coaxiale à la tige 22 et à l'arbre porteur 2, est montée à coulissement sur ladite tige 22. Un élément élastique, en l'espèce un ressort 31, est interposé entre la partie basse 32 de l'enclume 3 et une butée 25 disposée sur l'arbre mobile 2. La tête de l'enclume 3, sous l'action du ressort 31, vient se mettre en appui sur le crochet 21.

Un cliquet 4 est relié au corps du châssis 1 par l'intermédiaire d'une articulation élastique 41. Sous l'effet des forces de rappel élastiques, le cliquet 4 bascule en direction de l'enclume 3. L'extrémité libre du cliquet comporte une prise 43 dont la forme est adaptée pour venir se lier mécaniquement avec l'enclume 3. La partie extrémale du cliquet porte une surface inclinée 44, destinée à coopérer avec la face latérale 34 de l'enclume, comme cela sera expliqué en détail par la suite.

Une came 23 est disposée sur l'arbre porteur 2, de manière à engager un épaulement 42 pratiqué sur le cliquet 4. Ainsi, lorsque la came 23 engage ledit épaulement 42, le cliquet 4 est contraint de se désolidariser de l'enclume, et de libérer le mouvement de ladite enclume en direction du crochet.

Le châssis 1 porte également une table 11. Destinée à recevoir une nappe droit fil F comportant des fils de trame T et qui circule sur la face supérieure 12 de la table 11 en direction de la flèche D.

Un orifice 14 est pratiqué dans la table au droit de la trajectoire du crochet, de manière à permettre au crochet 21 d'accéder à la partie supérieure de la nappe afin de saisir en redescendant un tronçon de fil de trame.

Des moyens de soufflage 6, placés sous la table 11 sont orientés de manière à générer un courant d'air apte à évacuer les tronçons de trame qui sont libérés lorsque le crochet et l'enclume ne sont plus en contact l'un avec l'autre.

Le dispositif d'extraction tel que décrit ci-dessus est destiné à être monté sur une machine, préférentiellement placée juste en amont de la machine de calandrage.

En fonction de la largeur de la nappe droit-fil, on ajustera le nombre et la position des dispositifs d'extraction 7, de sorte que toutes les trames puissent être extraites au cours du défilement de la nappe.

On pourra utilement disposer une étrave (non représentée) en aval des dispositifs d'extraction, après avoir tranché et extrait le fil de trame, pour maintenir les fils de renfort écartés afin de faciliter le passage du crochet 21, et éviter de dégrader les fils de renfort.

La machine comporte autant d'éléments tranchants 5, intercalés entre les dispositifs d'extraction, de manière à sectionner les fils de trames en amont de l'axe XX' de la trajectoire du crochet.

On observera ici que, plus on réduit le nombre de dispositif d'extraction plus on augmente la longueur des tronçons de trame. Il s'ensuit que la course du crochet doit être allongée pour permettre l'extraction complète dudit tronçon, au détriment du temps de cycle du dispositif d'extraction et par voie de conséquence, de la vitesse de défilement de la nappe droit fil.

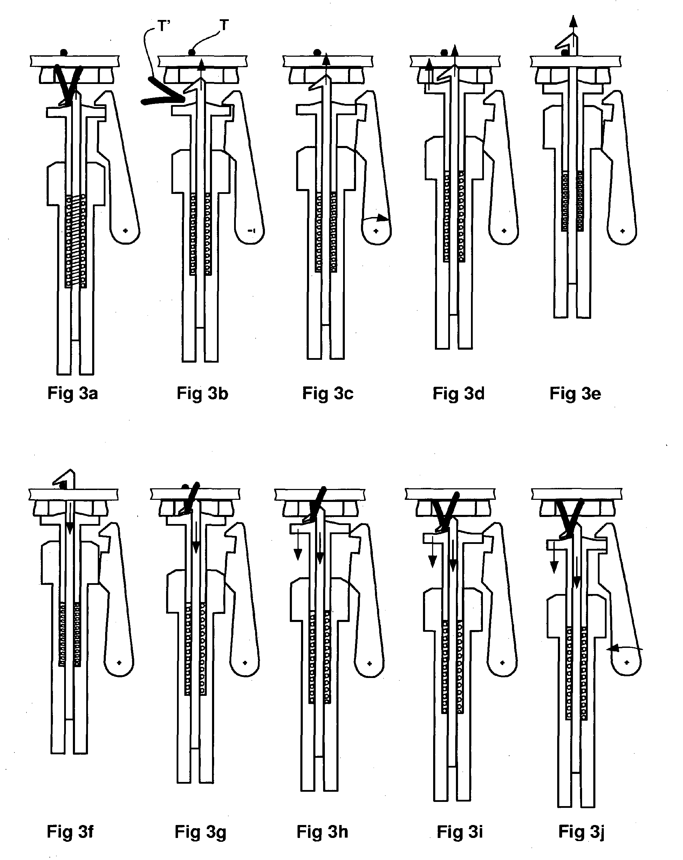

Les figures 3a à 3j ont pour objet d'illustrer les différentes positions des principaux organes mobiles du dispositif. Pour alléger la compréhension des schémas, on se reportera utilement à la figure 1 pour identifier les références numériques qui sont utilisées dans la description d'un cycle de fonctionnement telle que contenue dans les paragraphes qui suivent.

La figure 3a représente le dispositif lorsque le crochet 21 est en position basse. On observe qu'un tronçon de trame T provenant du cycle d'extraction précédent est encore emprisonné entre le crochet et l'enclume. Lorsque l'arbre porteur 2 amorce son mouvement de remontée en direction de la table (voir le sens de la flèche), le cliquet 4 est en prise avec l'enclume 3, et retient le mouvement de l'enclume. Le ressort 31 est mis en compression.

En poursuivant sa course dans le sens de la remontée, comme cela est illustré à la figure 3b, l'enclume 3 reste retenue par le cliquet 4. Le crochet 21 s'élève indépendamment de l'enclume et libère le tronçon de trame. Le courant d'air provenant des moyens de soufflage 6 évacue ledit tronçon vers un réceptacle (non représenté). La came 23 placée sur l'arbre porteur 2 commence à engager l'épaulement 42 du cliquet 4.

L'étape illustrée à la figure 3c représente le moment du cycle où le cliquet 4 libère l'enclume qui, sous l'action du ressort 31 est propulsé en direction de la table 11.

Une fois l'enclume libérée, la face supérieure 33 de l'enclume 3 vient en butée contre la face inférieure 13 de la table 11, comme cela est illustré à la figure 3d. La came engage complètement l'épaulement 42, et le cliquet 4 est maintenu dans sa position ouverte. Le crochet 21 continue de monter, et pénètre dans l'orifice 14 pratiqué dans la table 11.

La figure 3e illustre la configuration du dispositif lorsque l'arbre porteur 2 est en position haute. La came 23 reste engagée avec l'épaulement 4. Le crochet 21 est passé au-dessus de la nappe droit fil F de manière à se positionner au-dessus d'un tronçon de trame T préalablement sectionné par le couteau 5. L'enclume 3 est toujours en butée contre la face inférieure 13 de la table 11.

En amorçant sa descente, comme cela est illustré à la figue 3f, le crochet 21 embarque le tronçon de rame T.

En poursuivant sa descente en direction du châssis, comme cela est illustré à la figure 3g, le crochet 21 vient entrainer dans sa course l'enclume 3 de sorte que cet équipage forme une pince dans laquelle le tronçon de trame est emprisonné entre la face supérieure 33 de l'enclume et le crochet 21. La force de compression du ressort 31 maintien ces deux organes (33, 21) en contact l'un avec l'autre et empêche le tronçon de trame de s'échapper.

La poursuite de la descente de l'arbre porteur entraine l'enclume au contact de la partie extrémale 44 du cliquet 4. La came 23 commence alors à se dégager de l'épaulement 42 en référence à la figure 3h. Le tronçon de trame reste maintenu fermement entre le crochet et l'enclume.

La figure 3i, représente l'instant du cycle où la prise 43 du cliquet est libre d'engager la surface supérieure 33 de l'enclume 3.

Sous l'action de l'articulation élastique 41, le cliquet bascule en direction de l'enclume et la prise 43 se lie avec cette dernière. De préférence, on ajuste la pente de la partie terminale 33 du cliquet et la33 de l'enclume 3 de manière à ce que le cliquet vienne en prise avec l'enclume dans une position proche de la position basse de l'arbre porteur 2.

La figure 3j représente l'état du dispositif en position basse, équivalente à celle de la figure 3a. Le cliquet est en prise avec l'enclume 3. Le tronçon de trame est encore emprisonné entre l'enclume et le crochet.

L'arbre porteur peut alors amorcer sa remontée en reproduisant le cycle tel que décrit ci-dessus afin le libérer le tronçon de trame du précédent cycle, et extraire un nouveau tronçon de trame.

Le procédé d'extraction d'un fil de trame dans lequel on utilise un dispositif tel que décrit ci-dessus, comprend les étapes telles qu'illustrées par les figures 3a à 3j.

A la lecture de ce qui précède, l'homme du métier pourra aisément ajuster les courses et les positions respectives des différents organes mobiles les uns par rapport aux autres pour obtenir un résultat équivalent.

On pourra, à titre d'exemple, adapter le dispositif en modifiant la position axiale de la came 23 ou alternativement modifier la longueur de l'épaulement 42, pour augmenter ou diminuer la course remontante du crochet 21 pendant laquelle l'enclume est maintenue par le cliquet 4.

Il va de soi que la forme de réalisation décrite ci-dessus n'est pas exclusive, et qu'il est possible d'obtenir des fonctions équivalentes en modifiant la forme ou l'emplacement de certains organes

Ainsi, à titre d'exemple, il est tout à fait possible de substituer au cliquet à déplacement rotatif un cliquet à déplacement rectiligne, de modifier la forme et le point d'accrochage entre le cliquet et l'enclume.

De même, un dispositif comportant des crochets rotatifs collaborant avec une enclume pendant l'extraction du fil de trame, et débrayable sur le reste de la trajectoire du crochet serait également comprise dans le champ de l'invention.

## Revendications

1. Dispositif (7) destiné à extraire des fils de trames (T) disposés transversalement dans une nappe de fils de renfort droit fil (F) comprenant un crochet (21) apte à saisir un fil de trame (T) en effectuant un mouvement alternatif entre une position haute et une position basse **caractérisé en ce que** le crochet collabore avec une enclume débrayable (3) apte à se mouvoir le long du trajet (XX') du crochet (21) de sorte que lorsque le dispositif est en fonctionnement,
- l'enclume (3) est engagée au contact du crochet (21) pendant tout ou partie du mouvement de descente dudit crochet, formant une pince apte à maintenir un tronçon de trame entre le crochet (21) et l'enclume (3),
- l'enclume (3) est dégagée du contact avec ledit crochet (21) pendant le reste du parcours du crochet, de manière à permettre au crochet d'engager un fil de trame (T) et de libérer un tronçon de trame (T').

2. Dispositif d'extraction (7) selon la revendication 1, dans lequel le trajet du crochet est rectiligne (XX').

3. Dispositif d'extraction (7) selon l'une des revendications 1 ou 2, dans lequel le crochet (21) est monté sur une tige (22) supportée par un arbre (2) coulissant dans un conduit (15) aménagé dans un châssis fixe (1) et entrainé dans un mouvement alternatif de monte et baisse.

4. Dispositif d'extraction (7) selon l'une des revendications 1 à 3, dans lequel l'enclume (3) est montée à coulissement sur la tige (22) portant le crochet (21).

5. Dispositif d'extraction (7) selon la revendication 4, dans lequel un élément élastique (31) est placé entre l'enclume (3) et une butée (25) disposée sur l'arbre (2), de sorte que l'enclume subit une force tendant à amener ladite enclume en direction du crochet (21).

6. Dispositif d'extraction (7) selon la revendication 4, dans lequel un cliquet (4) mobile monté sur le châssis (1), est apte à engager mécaniquement l'enclume (3) de manière à retenir le mouvement de ladite enclume lors de la remontée de l'arbre coulissant (2).

7. Dispositif d'extraction (7) selon la revendication 6, dans lequel le cliquet (4) est monté sur le châssis par l'intermédiaire d'une articulation élastique (41).

8. Dispositif d'extraction (7) selon la revendication 7 dans lequel une came (23) disposée sur l'arbre porteur (2) collabore avec un épaulement (42) placé sur le cliquet (4) de sorte que :
- le cliquet (4) est libéré de son engagement mécanique avec l'enclume (3) lorsque la came (23) s'éloigne du corps du châssis (1).
- le cliquet s'engage mécaniquement sur l'enclume (3) sous l'action de l'articulation élastique (41) lorsque la came redescend en direction du corps du châssis (1).

9. Dispositif d'extraction (7) selon l'une des revendications 3 à 8, dans lequel le châssis (1) supporte une table (11) destinée à recevoir la nappe droit fil (F) sur sa face supérieure (12), et comportant un orifice (14) au travers duquel circule le crochet (21).

10. Dispositif d'extraction (7) selon la revendication 9, dans lequel la course de l'enclume (3) est limitée par la face inférieure (13) de la table.

11. Machine destinée à l'extraction de trames **caractérisée en ce qu'**elle comprend un ou plusieurs dispositifs d'extraction (7) selon l'une des revendications 1 à 10, disposés transversalement au sens de circulation d'une nappe de fils de renfort droit-fil.

12. Machine d'extraction de trame selon la revendication 11, comprenant des éléments tranchants (5), aptes à sectionner les fils de trame (T), disposés en amont des dispositifs d'extraction (7).

13. Machine d'extraction de trame selon l'une des revendications 11 ou 12 comprenant des moyens de soufflage (6) orientés de manière à générer un courant d'air apte à évacuer les tronçons de trame.

14. Machine d'extraction de trame selon l'une des revendications 11 à 13, comprenant une étrave placée en aval de chacun des dispositifs d'extraction apte à écarter les fils de renfort de manière à faciliter le passage du crochet.

15. Procédé d'extraction d'un fil de trame dans lequel on utilise un dispositif d'extraction (7) ou une machine selon l'une des revendications 1 à 14 comprenant les étapes suivantes:
- on saisit un tronçon de fil de trame (T) à l'aide d'un crochet (21) apte à saisir un fil de trame en effectuant un mouvement alternatif entre une position haute et une position basse ;
- on extrait le tronçon de trame (T) de la nappe en faisant descendre le crochet (21) engagé avec une enclume débrayable (3), apte à se mouvoir le long du trajet (XX') du crochet (21), pendant tout ou partie du trajet de descente dudit crochet, le tronçon de trame (T) étant pris en tenaille entre le crochet (21) et l'enclume (3);
- on évacue le tronçon de trame (T) après avoir dégagé l'enclume (3) du contact avec le crochet (21).

## Patentansprüche

1. Vorrichtung (7) zur Extraktion von Schussfäden (T), die quer in einer Schicht von rechten Verstärkungsfäden (F) angeordnet sind, umfassend einen Haken (21), der geeignet ist, einen Schussfaden (T) zu erfassen, wobei er eine Wechselbewegung zwischen einer oberen Position und einer unteren Position ausführt, **dadurch gekennzeichnet, dass** der Haken mit einem ausrückbaren Amboss (3) zusammenarbeitet, der geeignet ist, sich entlang der Bahn (XX') des Hakens (21) zu bewegen, so dass, wenn die Vorrichtung in Betrieb ist,
- der Amboss (3) in Kontakt mit dem Haken (21) während der Gesamtheit oder eines Teils der Abwärtsbewegung des Hakens in Eingriff ist, wobei eine Klemme gebildet wird, die geeignet ist, einen Schussfadenabschnitt zwischen dem Haken (21) und dem Amboss (3) zu halten,
- der Amboss (3) aus dem Kontakt mit dem Haken (21) während des übrigen Weges des Hakens befreit wird, um es dem Haken zu ermöglichen, einen Schussfaden (T) aufzunehmen und einen Schussfadenabschnitt (T') freizugeben.

2. Extraktionsvorrichtung (7) nach Anspruch 1, bei der die Bahn des Hakens geradlinig (XX') ist.

3. Extraktionsvorrichtung (7) nach einem der Ansprüche 1 oder 2, bei der der Haken (21) auf einer Stange (22) montiert ist, die von einer Welle (2) getragen wird, die in einer Leitung (15) gleitet, die in einem festen Rahmen (1) angeordnet und in einer Auf- und Abwärtswechselbewegung angetrieben wird.

4. Extraktionsvorrichtung (7) nach einem der Ansprüche 1 bis 3, bei der der Amboss (3) auf der Stange (22), die den Haken (21) trägt, gleitend montiert ist.

5. Extraktionsvorrichtung (7) nach Anspruch 4, bei der ein elastisches Element (31) zwischen dem Amboss (3) und einem auf der Welle (2) angeordneten Anschlag (25) angeordnet ist, so dass der Amboss einer Kraft ausgesetzt ist, die dazu neigt, den Amboss in Richtung des Hakens (21) zu führen.

6. Extraktionsvorrichtung (7) nach Anspruch 4, bei der eine bewegliche Klinke (4), die auf dem Rahmen (1) montiert ist, geeignet ist, in dem Amboss (3) mechanisch einzurasten, um die Bewegung des Ambosses beim Wiederaufsteigen der gleitenden Welle (2) zurückzuhalten.

7. Extraktionsvorrichtung (7) nach Anspruch 6, bei der die Klinke (4) auf dem Rahmen mit Hilfe eines elastischen Gelenks (41) montiert ist.

8. Extraktionsvorrichtung (7) nach Anspruch 7, bei der eine Nocke (23), die auf der Tragwelle (2) angeordnet ist, mit einem Absatz (42) zusammenarbeitet, der auf der Klinke (4) angeordnet ist, so dass:
- die Klinke (4) aus ihrem mechanischen Eingriff im Amboss (3) gelöst wird, wenn sich die Nocke (23) vom Körper des Rahmens (1) entfernt,
- die Klinke mechanisch im Amboss (3) unter der Wirkung des elastischen Gelenks (41) einrastet, wenn sich die Nocke wieder in Richtung des Körpers des Rahmens (1) abwärts bewegt.

9. Extraktionsvorrichtung (7) nach einem der Ansprüche 3 bis 8, bei der der Rahmen (1) einen Tisch (11) trägt, der dazu bestimmt ist, die rechte Fadenschicht (F) auf seiner Oberseite (12) aufzunehmen, und der eine Öffnung (14) umfasst, durch die der Haken (21) umläuft.

10. Extraktionsvorrichtung (7) nach Anspruch 9, bei der der Weg des Ambosses (3) durch die Unterseite (13) des Tisches begrenzt ist.

11. Maschine, die zur Extraktion von Schussfäden bestimmt ist, **dadurch gekennzeichnet, dass** sie eine oder mehrere Extraktionsvorrichtungen (7) nach einem der Ansprüche 1 bis 10 umfasst, die quer zur Umlaufrichtung einer Schicht von rechten Verstärkungsfäden angeordnet sind.

12. Maschine zur Extraktion eines Schussfadens nach Anspruch 11, umfassend Schneidelemente (5), die geeignet sind, die Schussfäden (T), die stromaufwärts zu den Extraktionsvorrichtungen (7) angeordnet sind, abzutrennen.

13. Maschine zur Extraktion eines Schussfadens nach einem der Ansprüche 11 oder 12, umfassend Gebläsemittel (6), die derart ausgerichtet sind, dass sie einen Luftstrom erzeugen, der geeignet ist, die Schussfadenabschnitte zu beseitigen.

14. Maschine zur Extraktion eines Schussfadens nach einem der Ansprüche 11 bis 13, umfassend einen Bug, der stromabwärts zu jeder der Extraktionsvorrichtungen angeordnet und geeignet ist, die Verstärkungsfäden zu beabstanden, um den Durchgang des Hakens zu erleichtern.

15. Verfahren zur Extraktion eines Schussfadens, bei dem eine Extraktionsvorrichtung (7) oder eine Maschine nach einem der Ansprüche 1 bis 14 verwendet werden, umfassend die folgenden Schritte:
- Erfassen eines Schussfadenabschnitts (T) mit Hilfe eines Hakens (21), der geeignet ist, einen Schussfaden zu erfassen, wobei er eine Wechselbewegung zwischen einer oberen Position und einer unteren Position ausführt;
- Extrahieren des Schussfadenabschnitts (T) aus der Schicht, wobei der Haken (21), der in einem ausrückbaren Amboss (3), der geeignet ist, sich entlang der Bahn (XX') des Hakens (21) während der Gesamtheit oder eines Teils der Abwärtsbahn des Hakens zu bewegen, in Eingriff ist, abgesenkt wird, wobei der Schussfadenabschnitt (T) zwischen dem Haken (21) und dem Amboss (3) eingespannt wird;
- Beseitigen des Schussfadenabschnitts (T), nachdem der Amboss (3) aus dem Kontakt mit dem Haken (21) befreit wurde.

## Claims

1. Device (7) intended for extracting weft threads (T) arranged transversely in a ply made of straight-thread reinforcing threads (F) comprising a hook (21) capable of gripping a weft thread (T) by performing an alternating movement between a high position and a low position, **characterized in that** the hook engages with a disengageable anvil (3) capable of moving along the path (XX') of the hook (21) so that, when the device is in operation,
- the anvil (3) is engaged in contact with the hook (21) during all or part of the descending movement of said hook, thereby forming a clamp capable of holding a section of weft between the hook (21) and the anvil (3),
- the anvil (3) is disengaged from contact with said hook (21) during the remainder of the travel of the hook, in such a way as to enable the hook to engage a weft thread (T) and to release a section of weft (T').

2. Device (7) intended for extracting according to Claim 1, in which the path of the hook is rectilinear (XX').

3. Device (7) intended for extracting according to one of Claims 1 and 2, in which the hook (21) is mounted on a rod (22) supported by a shaft (2) sliding in a conduit (15) arranged in a fixed chassis (1) and driven in an alternating upward and downward movement.

4. Device (7) intended for extracting according to one of Claims 1 to 3, in which the anvil (3) is slidably mounted on the rod (22) supporting the hook (21).

5. Device (7) intended for extracting according to Claim 4, in which an elastic element (31) is situated between the anvil (3) and an abutment (25) arranged on the shaft (2), so that the anvil is subjected to a force with the aim of bringing said anvil in the direction of the hook (21).

6. Device (7) intended for extracting according to Claim 4, in which a movable pawl (4) mounted on the chassis (1) is capable of engaging the anvil (3) mechanically in such a way as to restrain the movement of said anvil during the return movement of the sliding shaft (2) in the upward direction.

7. Device (7) intended for extracting according to Claim 6, in which the pawl (4) is mounted on the chassis by means of an elastic articulation (41).

8. Device (7) intended for extracting according to Claim 7, in which a cam (23) arranged on the supporting shaft (2) engages with a shoulder (42) located on the pawl (4) so that :
- the pawl (4) is released from its mechanical engagement with the anvil (3) when the cam (23) moves away from the body of the chassis (1),
- the pawl engages mechanically on the anvil (3) under the effect of the elastic articulation (41) when the cam descends once again in the direction of the chassis body (1).

9. Device (7) intended for extracting according to one of Claims 3 to 8, in which the chassis (1) supports a table (11) intended to receive the straight-thread ply (F) on its upper surface (12), and containing an orifice (14) through which the hook (21) moves.

10. Device (7) intended for extracting according to Claim 9, in which the travel of the anvil (3) is limited by the lower surface (13) of the table.

11. Machine intended for extracting of wefts, **characterized in that** it comprises one or a plurality of devices (7) intended for extracting according to one of Claims 1 to 10, arranged transversely along the direction of movement of a ply made of straight-thread reinforcing threads.

12. Machine for extracting weft according to Claim 11, comprising cutting elements (5), capable of cutting the weft threads (T), arranged upstream of the devices intended for extracting (7).

13. Machine for extracting weft according to one of Claims 11 and 12 comprising blowing means (6) oriented in such a way as to generate an air current capable of evacuating the sections of weft.

14. Machine for extracting weft according to one of Claims 11 to 13, comprising a splitter situated downstream of each of the devices intended for extracting that is capable of separating the reinforcing threads in such a way as to facilitate the passage of the hook.

15. Method for extracting a weft thread, in which use is made of a device intended for extracting (7) or a machine according to one of Claims 1 to 14 comprising the following steps:
- A section of weft thread (T) is gripped by a hook (21) capable of gripping a weft thread by performing an alternating movement between a high position and a low position;
- The section of weft (T) is extracted from the ply by lowering the hook (21) engaged with a disengageable anvil (3), capable of moving along the path (XX') of the hook (21), during all or part of the downwards path of said hook, the section of weft (T) being clamped between the hook (21) and the anvil (3);
- The section of weft (T) is removed after the anvil (3) has been disengaged from contact with the hook (21).
